# DEMANDE DE BREVET EUROPEEN

(11) **EP 2 352 051 A1**
(43) Date de publication de la demande: **03.08.2011**
(21) Numéro de dépôt: 11000380.3
(22) Date de dépôt: 19.01.2011
(51) Int. Cl.: G02B 27/64, G01M 7/02, H04N 17/00, H04N 5/232

(54) **Procédé et système de test d'un dispositif de stabilisation d'image notament pour appareil de prise de vue**

(30) Priorité: 28.01.2010 FR 1000320
(71) Demandeur: STMicroelectronics (Grenoble 2) SAS, 38000 Grenoble (FR)
(72) Inventeur: Luneau, Dominique, 74270 Chilly (FR); Varillon, Paul, 38100 Grenoble (FR); Serve, Rémi, 69160 Tassin la Demi-Lune (FR)
(74) Mandataire: Marchand, André

(57) **Abrégé**

L'invention concerne un procédé de test d'un système de stabilisation d'image dans un appareil de prise de vue (5), comprenant des étapes consistant à : soumettre l'appareil de prise de vue à des mouvements vibratoires rotatifs autour de deux axes de rotation distincts (X, Y), mesurer des caractéristiques (SV) des mouvements vibratoires rotatifs, asservir les mouvements vibratoires rotatifs à des valeurs de position de consigne (SP) et en tenant compte des caractéristiques mesurées des mouvements vibratoires, recueillir des images de l'appareil de prise de vue soumis aux vibrations et analyser les images recueillies,

## Description

La présente invention concerne le test des performances d'un système permettant de compenser des effets de tremblements dont sont affectés le corps humain et en particulier les mains, durant des opérations nécessitant la tenue d'un objet aussi fixement que possible ou avec une précision aussi grande que possible.

Certains appareils de prise de vue comme les appareils photos et caméras numériques, sont équipés d'un tel système pour compenser des mouvements de tremblement dans la tenue de l'appareil, et ainsi améliorer la netteté des images floues lors d'une prise de vue. Ces mouvements de tremblement sont d'autant plus importants que l'appareil est léger et peut être tenu avec une seule main.

Les mouvements de tremblement humain consistent en des mouvements vibratoires involontaires qui s'ajoutent aux mouvements volontaires. Ces mouvements vibratoires présentent généralement des amplitudes situées entre quelques dixièmes de millimètres et quelques millimètres, et peuvent comprendre plusieurs harmoniques allant de 0.1 Hz à 20 Hz, et présenter des vitesses angulaires d'environ 2°/s et/ou linéaires d'environ 2 mm/s.

Ainsi, il existe des systèmes électromécaniques de stabilisation d'image comprenant des capteurs d'accélération et de vitesse de rotation pour mesurer des mouvements de tremblement, et des actionneurs pour compenser ces mouvements en déplaçant des éléments optiques ou le capteur d'image de l'appareil de prise de vue. En raison de leur coût élevé et de leur encombrement important, ces systèmes équipent plus particulièrement les appareils photo haute gamme et volumineux, comme les appareils reflex.

Pour les appareils plus bas de gamme comme les appareils photo dits "compacts" et ceux installés dans les téléphones mobiles, on a mis au point des algorithmes de stabilisation d'image, visant à corriger l'effet de flou dans les images obtenues, résultant de mouvements de tremblement dans le maintien de l'appareil. Certains systèmes de stabilisation d'image se basent sur une détection des mouvements de tremblement. Dans certains systèmes, la détection des mouvements de tremblement est effectuée à l'aide de capteurs, et dans d'autres systèmes, elle est effectuée par comparaison d'images successives. Sur la base des mouvements de tremblement détectés, les algorithmes de stabilisation d'image appliquent à l'image une correction visant à limiter ou corriger l'effet de flou de l'image. D'autres algorithmes de stabilisation d'image consistent à exploiter une image prise à la vitesse requise et une image prise à une plus grande vitesse, pour produire une image corrigée.

Il existe un besoin de test des performances de tels systèmes de stabilisation ou de correction d'image, dans des buts de mise au point, de caractérisation et de comparaison de différents systèmes de stabilisation d'image existants. A cet effet, ces systèmes peuvent être testés sur quelques personnes. Toutefois, de tels tests s'avèrent insuffisants en raison de la difficulté à sélectionner un ensemble de personnes qui soit suffisamment représentatif pour obtenir des résultats qui soient exhaustifs. Il se pose également le problème de la reproductibilité de ces tests, notamment pour effectuer des comparaisons. Il est en effet impossible qu'une personne puisse reproduise exactement un même mouvement de tremblement qui est par nature involontaire.

Il existe des systèmes robotisés permettant de commander les déplacements et la position dans l'espace d'un objet. Ces systèmes s'avèrent généralement incapables de générer des vibrations contrôlées en amplitude et en fréquence avec une précision suffisante pour simuler de manière reproductible des mouvements de tremblement humain, notamment en raison d'une inertie et/ou un temps de réponse trop élevés, En particulier, ces systèmes ne peuvent générer des vibrations de fréquence supérieure à 10 Hz, sachant qu'un tremblement humain peut atteindre la fréquence de 20 Hz. Ces systèmes s'avèrent également incapables de reproduire un mouvement vibratoire combinant plusieurs fréquences et amplitudes. Par ailleurs, certains systèmes mettant en oeuvre un bras robotisé nécessitent d'être enfermés dans une enceinte de sécurité qui s'avère incompatible avec la tenue d'un appareil de prise de vue devant être pointé sur une scène pour pouvoir réaliser des tests du système de stabilisation d'image.

Il peut donc être souhaitable de réaliser un dispositif de test des performances d'un système de stabilisation d'image, notamment dans un appareil de prise de vue, qui soit capable de reproduire un ou plusieurs mouvements combinés de tremblement humain, avec une précision suffisante à la fois en fréquence et en amplitude.

Des modes de réalisation concernent un procédé de test d'un système de stabilisation compensant des mouvements de tremblement humains, comprenant des étapes consistant à : soumettre le système de stabilisation à des mouvements vibratoires rotatifs autour de deux axes de rotation distincts. Selon un mode de réalisation, le procédé comprend des étapes consistant à : mesurer des caractéristiques des mouvements vibratoires rotatifs, et asservir les mouvements vibratoires rotatifs à des valeurs de position de consigne et en tenant compte des caractéristiques mesurées des mouvements vibratoires.

Selon un mode de réalisation, le procédé comprend des étapes de soumission du système de stabilisation à un mouvement vibratoire de translation suivant un axe de translation perpendiculaire à l'un des deux axes de rotation, mesurer des caractéristiques du mouvement vibratoire de translation appliqué à l'appareil de prise de vue, et asservir le mouvement vibratoire de translation à des valeurs de position de consigne, en tenant compte des caractéristiques mesurées du mouvement vibratoire de translation.

Selon un mode de réalisation, les caractéristiques mesurées du mouvement vibratoire de translation comprennent une position et une accélération linéaire instantanées.

Selon un mode de réalisation, le mouvement vibratoire autour d'un axe de rotation est appliqué au système de stabilisation d'une manière indépendante des autres mouvements vibratoires appliqués au système de stabilisation.

Selon un mode de réalisation, les caractéristiques mesurées des mouvements vibratoires rotatifs comprennent des positions angulaires instantanées et des vitesses angulaires instantanées autour des axes de rotation.

Selon un mode de réalisation, les caractéristiques des mouvements vibratoires appliquées au système de stabilisation sont mesurées et des commandes appliquées à des actionneurs générant les mouvements vibratoires sont calculées à une cadence de l'ordre de 100 à 200 fois une cadence à laquelle sont fournies les valeurs de position de consigne.

Selon un mode de réalisation, le procédé comprend une étape de comparaison des valeurs de position mesurées et des valeurs de position de consigne.

Selon un mode de réalisation, le système de stabilisation équipe un appareil de prise de vue, le procédé comprenant des étapes de recueil d'images de l'appareil de prise de vue soumis aux vibrations, et d'analyse des images recueillies, en vue de déterminer des performances du système de stabilisation.

Selon un mode de réalisation, le procédé comprend des étapes de mesure de caractéristiques de mouvements vibratoires rotatifs autour de deux axes de rotation distincts, d'un objet tenu par un humain, de détermination de positions successives autour des axes de rotation, en fonction des caractéristiques mesurées, et de mémorisation des positions successives déterminées.

Selon un mode de réalisation, le procédé comprend des étapes de mesure de caractéristiques d'un mouvement vibratoire de translation le long d'un axe de translation parallèle à l'un des deux axes de rotation, de l'objet tenu par un humain, de détermination de positions successives le long de l'axe de translation, en fonction des mouvements mesurés, et de mémorisation des positions successives déterminées

Selon un mode de réalisation, le procédé comprend une étape de fourniture des positions successives mémorisées en tant que valeurs de position de consigne pour asservir les mouvements vibratoires appliqués au système de stabilisation.

Selon un mode de réalisation, le procédé comprend des étapes de détermination des valeurs de position de consigne en fonction de valeurs d'amplitudes et de fréquences d'un ou plusieurs mouvements vibratoires combinés.

Des modes de réalisation concernent également un dispositif de test d'un système de stabilisation compensant des mouvements de tremblement humains, configuré pour mettre en oeuvre le procédé défini précédemment.

Selon un mode de réalisation, le dispositif comprend des actionneurs du type "voice coil" pour appliquer au système de stabilisation compensant des mouvements de tremblement humains des mouvements vibratoires rotatifs et/ou translatifs.

Selon un mode de réalisation, le dispositif comprend des potentiomètres linéaires pour mesurer la position d'un support du système de stabilisation autour des axes de rotation et/ou le long de l'axe de translation, des gyromètres pour mesurer les vitesses angulaires instantanées du système de stabilisation autour des axes de rotation, et/ou un accéléromètre linéaire pour mesurer l'accélération linéaire instantanée du système de stabilisation.

Selon un mode de réalisation, le dispositif comprend un premier support fixe, un second support monté rotatif sur le premier support, un troisième support monté rotatif sur le second support et agencé pour recevoir un appareil de prise de vue, le second support pouvant être monté mobile en translation sur le premier support.

Des exemples de réalisation de l'invention seront décrits dans ce qui suit, à titre non limitatif en relation avec les figures jointes parmi lesquelles :
- la figure 1 représente schématiquement un dispositif de test des performances d'un système de stabilisation d'image d'un appareil de prise de vue, selon un mode de réalisation,
- la figure 2 représente schématiquement un dispositif de test des performances d'un système de stabilisation d'image d'un appareil de prise de vue, selon un autre mode de réalisation,
- la figure 3 représente une courbe de mouvements de rotation appliqués par le dispositif de test sur un ou deux axes de rotation ou de translation,
- la figure 4 représente schématiquement un dispositif de mesure et d'enregistrement de mouvements de tremblement humains, selon un mode de réalisation.

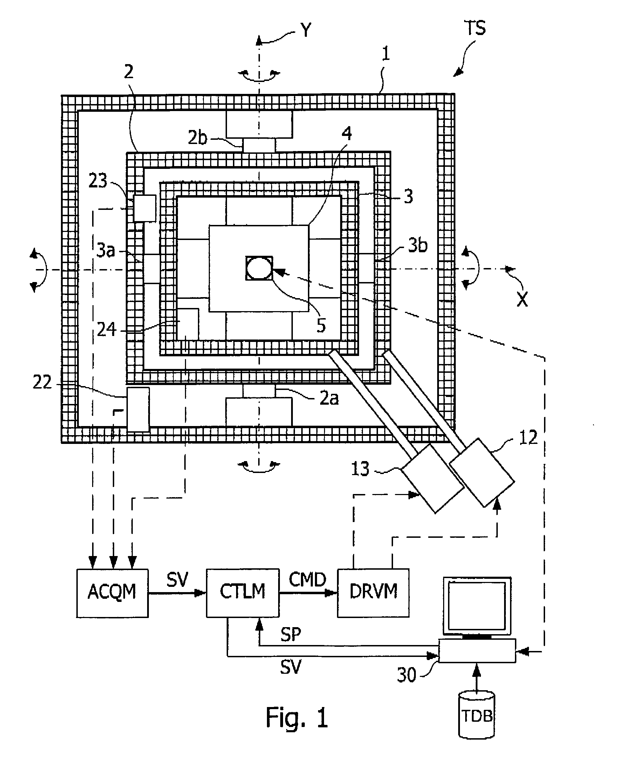

La figure 1 représente un dispositif de test des performances d'un système de stabilisation d'image notamment d'un appareil de prise de vue, selon un mode de réalisation. Le dispositif de test comprend un ensemble mécanique vibrant TS couplé mécaniquement à des actionneurs 12, 13, et des capteurs 22, 23, 24. Les signaux issus des capteurs 22, 23, 24 sont transmis à un module d'acquisition ACQM. Le module ACQM met en forme les signaux reçus et transmet des signaux mis en forme SV à un module de contrôle CTLM. Le module CTLM élabore des valeurs de commande CMD à appliquer aux actionneurs 12, 13 en fonction des signaux SV et de valeurs de consigne SP. Les valeurs CMD sont transmises à un module de commande DRVM qui convertit les valeurs CMD en des signaux électriques aptes à commander les actionneurs 12, 13. Les valeurs de consignes SP sont fournies au module CTLM par un calculateur 30, par exemple de type ordinateur PC.

L'ensemble mécanique TS comprend un support fixe 1, et des supports mobiles 2, 3 qui sont mobiles par rapport au support 1. Le support mobile 2 est monté mobile en rotation autour d'un axe Y par rapport au support fixe 1. Dans l'exemple de la figure 1, l'axe Y est vertical. Le support mobile 3 est monté mobile en rotation par rapport au support mobile 2 autour d'un axe X distinct de l'axe Y, par exemple sensiblement perpendiculaire à l'axe Y. Dans l'exemple de la figure 1, l'axe X est mobile dans un plan horizontal. Le support 2 comporte par exemple deux arbres coaxiaux 2a, 2b maintenus dans des paliers formés dans le support 1. De même, le support 3 comporte par exemple deux arbres coaxiaux 3a, 3b maintenus dans des paliers formés dans le support 2.

La position angulaire du support mobile 2 autour de l'axe Y est contrôlée par l'actionneur 12, et la position angulaire du support mobile 3 autour de l'axe X est contrôlée par l'actionneur 13. Par ailleurs, les capteurs 22 et 23 fournissent chacun un signal de position instantanée permettant de déterminer la position angulaire des supports 2, 3 autour de leur axe de rotation Y, X respectif. L'ensemble de capteurs 24 fournit des signaux de vitesses angulaires instantanées des supports 2, 3 autour de leur axe Y, X respectif. Le support mobile 3 est configuré pour supporter un appareil de prise de vue 5 et comporte à cet effet des moyens de fixation adaptés à la fixation d'un tel appareil.

Dans l'exemple de la figure 1, les supports 1, 2, 3 présentent la forme de cadres, mais peuvent bien entendu présenter d'autres formes comme par exemple la forme d'un U, avec deux branches reliées par une base, l'extrémité des deux branches supportant les paliers de maintien des arbres 2a, 2b, 3a, 3b.

Les capteurs 22, 23 sont par exemple des potentiomètres linéaires fournissant une valeur de déplacement linéaire, permettant de déduire une valeur de déplacement angulaire des supports mobiles 2, 3 à partir de la distance entre le point de mesure fournie par le capteur et l'axe de rotation X ou Y. L'ensemble de capteurs 24 comprend par exemple des gyromètres fournissant une valeur de vitesse angulaire pour chaque axe de rotation X, Y. Les actionneurs 12, 13 peuvent être de type actionneur électrodynamique linéaire, par exemple de type "Voice Coil" (Voice Coil Actuator), présentant l'avantage de permettre un positionnement rapide et précis.

L'ensemble des modules ACQM, CTLM, DRVM, des actionneurs 12, 13 et des capteurs 22, 23, 24 forme une boucle d'asservissement dans laquelle les mouvements des supports mobiles 2, 3 sont asservis pour suivre des courbes respectives de variation de position angulaire. L'asservissement peut ainsi être réalisé de manière à atteindre une erreur de précision inférieure à 0.01°, dans le positionnement des supports mobiles 2, 3, autour de leur axe de rotation X, Y. La fréquence de la boucle fermée d'asservissement, c'est-à-dire, la fréquence à laquelle sont fournies les signaux de mesures SV par le module ACQM et à laquelle les signaux de commande CMD sont fournis par le module CTLM, peut être de l'ordre de 100 à 200 fois la cadence à laquelle sont fournies les valeurs de consignes SP par le calculateur 30. Par exemple, le calculateur 30 fournit pour chaque actionneur 12, 13 une valeur de consigne de position SP sensiblement toutes les 10 ms, tandis que le module CTLM calcule une valeur de commande CMD pour chaque actionneur 12, 13 toutes les 62,5 µs. Si le mouvement vibratoire à reproduire présente une fréquence inférieure ou égale à 20 Hz, le calculateur 30 fournit donc au moins 5 valeurs de consigne SP par période de la vibration à simuler, ce qui permet de reproduire un mouvement vibratoire par exemple sinusoïdal, avec une précision suffisante.

Le module CTLM peut également être configuré pour transmettre au calculateur 30 toutes les mesures de position et de vitesse reçues du module ACQM. De cette manière, l'utilisateur peut contrôler sur le calculateur 30 avec quelle précision chacun des mouvements appliqués aux supports mobiles 2, 3 suit une courbe de variation de valeurs de consigne.

Le calculateur 30 est configuré pour permettre à l'utilisateur d'introduire pour chaque axe de rotation X, Y des caractéristiques d'un mouvement vibratoire, telles qu'une ou plusieurs fréquences de vibration à combiner et pour chaque fréquence une amplitude de mouvement. A partir de ces caractéristiques, le calculateur 30 détermine des valeurs de position du support 2, 3, espacées d'une certaine période, par exemple 10 ms. Le calculateur 30 peut également être configuré pour recevoir par exemple dans un fichier, des ensembles de valeurs de position de support 2, 3, par exemple issues d'une mesure de mouvements de tremblement réalisée sur une personne.

Le calculateur 30 peut également être configuré pour déclencher des opérations de prise de vue sur l'appareil de prise 5 de vue fixé au dispositif de test, à des instants choisis par rapport aux mouvements vibratoires appliqués aux supports 2, 3, les opérations de prise de vue ayant des caractéristiques, telles que vitesse de prise de vue, ouverture et sensibilité (ISO) choisies. Les images prises par l'appareil 5 peuvent être transmises au calculateur 30 qui les mémorise. Le calculateur 30 peut ensuite analyser les images transmises pour évaluer un niveau de flou et corréler le niveau de flou obtenu avec le mouvement vibratoire appliqué à l'appareil de prise de vue par le dispositif de test, lors de la prise de vue.

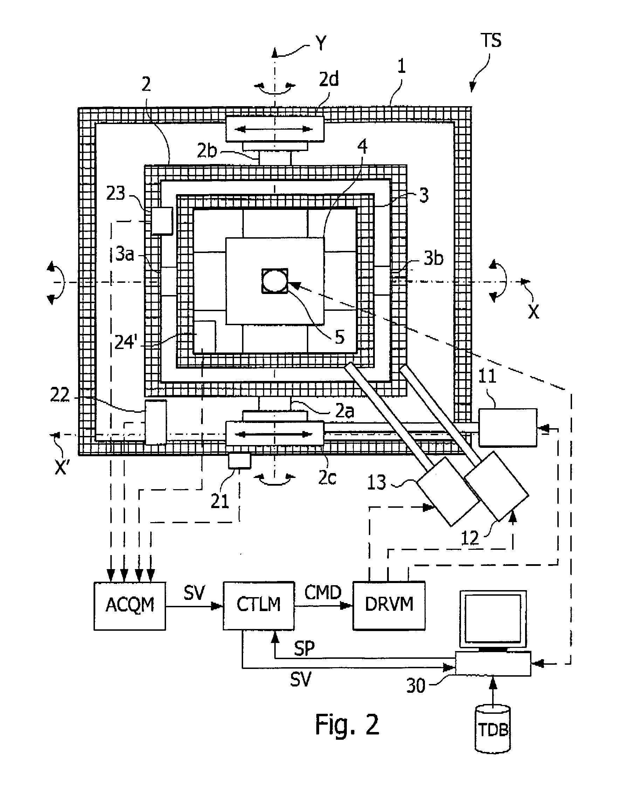

Selon un mode de réalisation illustré par la figure 2, le support 2 est également monté mobile en translation par rapport au support 1. Ainsi la figure 2 représente un dispositif de test des performances d'un système de stabilisation d'image dans un appareil de prise de vue. Le dispositif de test de la figure 2 diffère de celui de la figure 1 en ce que le support 2 est également monté mobile en translation par rapport au support 1, par exemple suivant un axe X' perpendiculaire à l'axe Y dans le plan du support 1 (ou parallèle à l'axe X lorsque le support 2 est dans le plan du support 1). A cet effet, les paliers maintenant les arbres 2a, 2b sont par exemple formés dans des chariots 2c, 2d montés coulissants sur le support 1 formant des rails. La position du support 2 dans le plan du support 1 est commandée par un actionneur 11 contrôlé par le module DRVM et mesurée par un capteur 21 connecté au module ACQM et fournissant une valeur de position instantanée. L'ensemble de capteurs 24 est remplacé par un ensemble de capteurs 24' qui diffère de l'ensemble 24 en ce qu'il comprend en outre un capteur d'accélération linéaire suivant l'axe de translation X' du support 2 par rapport au support 1, fournissant une valeur d'accélération linéaire instantanée du support 2. Les modules ACQM, CTLM, DRVM et le calculateur 30 sont alors configurés pour assurer également le contrôle des mouvements de translation du support 2 par rapport au support 1.

Les modules ACQM, CTLM, et DRVM sont par exemple réalisés à partir de produits commercialisés par par la société NATIONAL INSTRUMENTS. Ainsi, le module ACQM est par exemple réalisé à partir d'un châssis PXI-1033 incorporant une carte PXI 7356 6 à axes et une carte d'alimentation continue PXI 4110. Le module DRVM est par exemple un amplificateur de puissance 4 axes MID 7654. Le module CTLM peut être réalisé à l'aide d'une carte PXI PCIe8361, qui peut être connectée à un bus interne PCI d'un ordinateur de type PC. Les consignes SP peuvent être élaborées à l'aide d'un logiciel installé dans le calculateur 30, tel que le logiciel LabView également commercialisé par la société NATIONAL INSTRUMENTS, Le dispositif de test peut ainsi générer des vibrations pouvant atteindre une fréquence de 20 Hz et une amplitude de 2°.

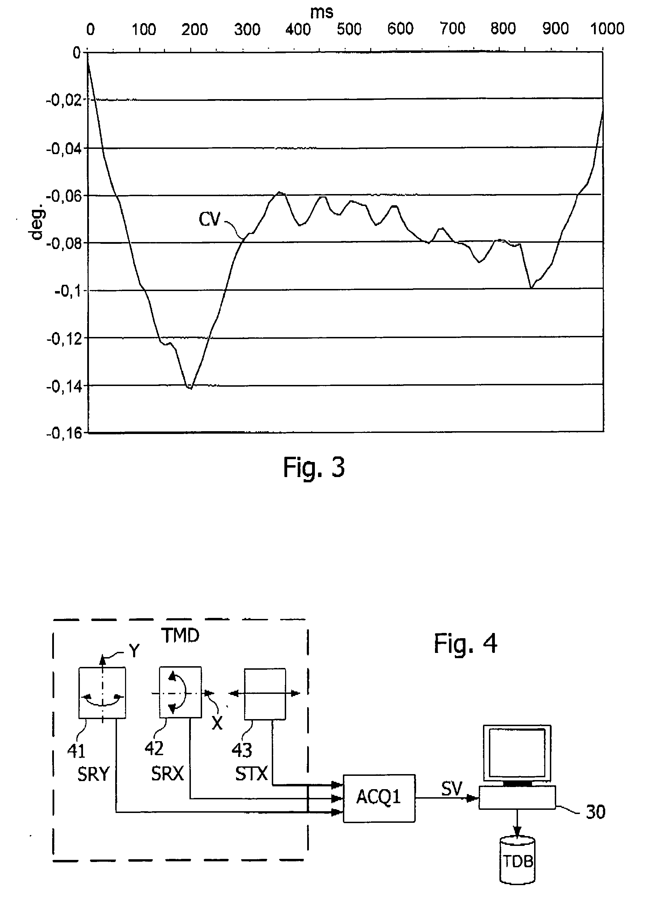

Le dispositif de test qui vient d'être décrit permet de reproduire des mouvements vibratoires complexes, tel que celui illustré sur la figure 3. La figure 3 représente une courbe CV de mouvements de rotation appliqués autour de l'un ou les deux axes de rotation X, Y, et/ou de mouvements de translation suivant l'axe de translation X' du dispositif de test. La courbe CV comprend 1000 points correspondant à 1000 valeurs de position angulaire exprimées en degrés qui sont envoyées successivement toutes les 10 ms par le calculateur 30 au module CTLM. La précision de 0.01° conférée par l'asservissement permet d'obtenir un mouvement vibratoire proche de celui correspondant à la courbe CV.

Un mode de réalisation concerne également un dispositif permettant de détecter et d'enregistrer un mouvement vibratoire humain, en rotation autour de deux axes distincts qui peuvent être perpendiculaires, et éventuellement en translation dans une direction perpendiculaire à l'un des deux axes. Ainsi, la figure 4 représente un dispositif de détection d'un mouvement vibratoire configuré pour être tenu à la main comme un appareil de prise de vue. Le dispositif de détection TMD comprend deux gyromètres 41, 42. Le gyromètre 41 fournit un signal SRY proportionnel à une vitesse de rotation du dispositif TMD autour d'un axe Y, par exemple sensiblement vertical. Le gyromètre 42 fournit un signal SRX proportionnel à une vitesse de rotation du dispositif TMD autour d'un axe X distinct de l'axe Y, par exemple perpendiculaire à l'axe Y ou dans un plan horizontal. Les signaux SRX et SRY sont transmis à un module d'acquisition ACQ1 qui met en forme les signaux et les transmet vers un dispositif d'enregistrement par exemple réalisé à partir d'un ordinateur de type PC 30. Le dispositif TMD est par exemple similaire à l'ensemble de capteurs 24 décrit en référence à la figure 1. Le module ACQ1 comprend par exemple les circuits de traitement de signaux de vitesse angulaire du module ACQM. Le module ACQ1 fournit à l'ordinateur périodiquement, par exemple toutes les 10 ms, des mesures de vitesse angulaire qui sont enregistrées par l'ordinateur. L'ordinateur en déduit par un calcul d'intégration des valeurs de position angulaire qui peuvent ensuite être enregistrées dans un fichier TDB qui peut être fourni au dispositif de test de la figure 1, les valeurs de ce fichier étant fournies par le calculateur 30 en tant que valeurs de consigne SP au module de contrôle CTLM.

Selon un mode de réalisation, le dispositif TMD comprend également un capteur d'accélération 43 qui fournit un signal STX proportionnel à une accélération du dispositif TMD suivant la direction X. Le signal STX est également traité par le module ACQ1 qui fournit à l'ordinateur périodiquement, par exemple toutes les 10 ms, une mesure d'accélération. Ces mesures permettent par un calcul d'intégration de déterminer des valeurs de position qui peuvent être enregistrées dans le fichier TDB, afin d'être fournies comme valeurs de consigne SP au dispositif de test de la figure 2.

Il apparaîtra clairement à l'homme de l'art que la présente invention est susceptible de diverses variantes de réalisation et diverses applications. En particulier, l'invention ne s'applique pas uniquement aux appareils de prise de vue, mais peut s'appliquer à tout dispositif pouvant être équipé d'un système visant à compenser des mouvements de tremblement humain lors de la tenue d'un objet par la ou les mains.

## Revendications

1. Procédé de test d'un système de stabilisation (5) compensant des mouvements de tremblement humains, comprenant une étape de soumission du système de stabilisation à des mouvements vibratoires rotatifs autour de deux axes de rotation distincts (X, Y),
**caractérisé en ce qu'**il comprend des étapes consistant à:
mesurer des caractéristiques (SV) des mouvements vibratoires rotatifs, et
asservir les mouvements vibratoires rotatifs à des valeurs de position de consigne (SP), en tenant compte des caractéristiques mesurées (SV) des mouvements vibratoires.

2. Procédé selon la revendication 1, comprenant des étapes de soumission du système de stabilisation (5) à un mouvement vibratoire de translation suivant un axe de translation (X') perpendiculaire à l'un des deux axes de rotation (X, Y), mesurer des caractéristiques du mouvement vibratoire de translation appliqué au système de stabilisation, et asservir le mouvement vibratoire de translation à des valeurs de position de consigne (SP), en tenant compte des caractéristiques mesurées (SV) du mouvement vibratoire de translation.

3. Procédé selon la revendication 2, dans lequel les caractéristiques mesurées du mouvement vibratoire de translation comprennent une position et une accélération linéaire instantanées.

4. Procédé selon l'une des revendications 1 à 3, dans lequel le mouvement vibratoire autour d'un axe de rotation (X, Y) est appliqué au système de stabilisation (5) d'une manière indépendante des autres mouvements vibratoires appliqués au système de stabilisation.

5. Procédé selon l'une des revendications 1 à 4, dans lequel les caractéristiques mesurées des mouvements vibratoires rotatifs comprennent des positions angulaires instantanées et des vitesses angulaires instantanées autour des axes de rotation (X, Y).

6. Procédé selon l'une des revendications 1 à 5, dans lequel les caractéristiques des mouvements vibratoires appliquées au système de stabilisation (5) sont mesurées et des commandes (CMD) appliquées à des actionneurs (11, 12, 13) générant les mouvements vibratoires sont calculées à une cadence de l'ordre de 100 à 200 fois une cadence à laquelle sont fournies les valeurs de position de consigne (SP).

7. Procédé selon l'une des revendications 1 à 6, comprenant une étape de comparaison des valeurs de position mesurées (SV) et des valeurs de position de consigne (SP).

8. Procédé selon l'une des revendications 1 à 7, dans lequel le système de stabilisation équipe un appareil de prise de vue, le procédé comprenant des étapes de recueil d'images de l'appareil de prise de vue soumis aux vibrations, et d'analyse des images recueillies, en vue de déterminer des performances du système de stabilisation.

9. Procédé selon l'une des revendications 1 à 8, comprenant des étapes de mesure de caractéristiques de mouvements vibratoires rotatifs autour de deux axes de rotation distincts (X, Y) d'un objet tenu par un humain, de détermination de positions successives autour des axes de rotation, en fonction des caractéristiques mesurées, et de mémorisation des positions successives déterminées.

10. Procédé selon l'une des revendications 1 à 9, comprenant des étapes de mesure de caractéristiques d'un mouvement vibratoire de translation le long d'un axe de translation parallèle à l'un des deux axes de rotation, de l'objet tenu par un humain, de détermination de positions successives le long de l'axe de translation, en fonction des mouvements mesurés et de mémorisation des positions successives déterminées

11. Procédé selon la revendication 9 ou 10, comprenant une étape de fourniture des positions successives mémorisées en tant que valeurs de position de consigne (SP) pour asservir les mouvements vibratoires appliqués au système de stabilisation.

12. Procédé selon l'une des revendications 1 à 8, comprenant des étapes de détermination des valeurs de position de consigne (SP) en fonction de valeurs d'amplitudes et de fréquences d'un ou plusieurs mouvements vibratoires combinés.

13. Dispositif de test d'un système de stabilisation (5) compensant des mouvements de tremblement humains,
**caractérisé en ce qu'**il est configuré pour mettre en oeuvre le procédé selon l'une des revendications 1 à 12.

14. Dispositif selon la revendication 13, comprenant des actionneurs du type "voice coil" pour appliquer au système de stabilisation (5) compensant des mouvements de tremblement humains des mouvements vibratoires rotatifs et/ou translatifs.

15. Dispositif selon la revendication 13 ou 14, comprenant des potentiomètres linéaires pour mesurer la position d'un support du système de stabilisation (5) autour des axes de rotation et/ou le long de l'axe de translation, des gyromètres pour mesurer les vitesses angulaires instantanées du système de stabilisation autour des axes de rotation, et/ou un accéléromètre linéaire pour mesurer l'accélération linéaire instantanée du système de stabilisation.

16. Dispositif selon l'une des revendications 13 à 15, comprenant un premier support fixe (1), un second support (2) monté rotatif sur le premier support, un troisième support (3) monté rotatif sur le second support et agencé pour recevoir un appareil de prise de vue, le second support pouvant être monté mobile en translation sur le premier support.
